(19) Europäisches Patentamt / European Patent Office / Office européen des brevets

(11) **EP 4 239 718 A1**

(12) **EUROPEAN PATENT APPLICATION**
published in accordance with Art. 153(4) EPC

(43) Date of publication:
06.09.2023 Bulletin 2023/36

(21) Application number: 21897601.7

(22) Date of filing: 28.10.2021

(51) International Patent Classification (IPC):
$H01M\ 4/14$ (2006.01)    $H01M\ 4/62$ (2006.01)
$H01M\ 4/73$ (2006.01)    $H01M\ 10/06$ (2006.01)

(52) Cooperative Patent Classification (CPC):
H01M 4/14; H01M 4/62; H01M 4/73; H01M 10/06;
Y02E 60/10

(86) International application number:
PCT/JP2021/039745

(87) International publication number:
WO 2022/113625 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.11.2020 JP 2020197590

(71) Applicant: GS Yuasa International Ltd.
Kisshoin, Minami-ku,
Kyoto-shi, Kyoto 601-8520 (JP)

(72) Inventors:
• KAWATA, Yoshihiro
  Kyoto-shi, Kyoto 601-8520 (JP)
• KOJIMA, Rikio
  Kyoto-shi, Kyoto 601-8520 (JP)

(74) Representative: Isarpatent
Patent- und Rechtsanwälte Barth
Charles Hassa Peckmann & Partner mbB
Friedrichstrasse 31
80801 München (DE)

(54) **LEAD-ACID BATTERY**

(57) A lead-acid battery includes a negative electrode plate, a positive electrode plate, and an electrolyte solution. The negative electrode plate includes a negative electrode material, and the positive electrode plate includes a positive electrode current collector and a positive electrode material. The negative electrode material contains a polymer compound having a peak in a range of 3.2 ppm or more and 3.8 ppm or less in a chemical shift of a $^1$H-NMR spectrum measured using deuterated chloroform as a solvent. The content of the polymer compound in the negative electrode material is 600 ppm or less on a mass basis. The arithmetic average roughness Ra of a surface of the positive electrode current collector is 2 $\mu$m or more.

Fig. 2A

EP 4 239 718 A1

**Description**

TECHNICAL FIELD

The present invention relates to a lead-acid battery.

BACKGROUND ART

Lead-acid batteries are in use for various applications, including automotive and industrial applications. The lead-acid batteries include a negative electrode plate, a positive electrode plate, a separator (or mat), an electrolyte solution, and the like. Each electrode plate includes a current collector and an electrode material.

Regarding a positive electrode current collector, Patent Document 1 proposes a foil for a lead-acid battery positive electrode current collector in which the foil is formed of titanium or a titanium alloy and the surface roughness of at least one surface satisfies 0.05 < Ra < 1.0 and 0.3 < Ry < 7.0.

Patent Document 2 discloses a lead-acid battery including: a positive electrode and a negative electrode each immersed in an electrolyte solution, the positive electrode having a first surface and a second surface opposite to the first surface, the negative electrode having a first surface and a second surface opposite to the first surface; and a fiber-attached mat covering at least a part of at least one of the first surface and the second surface of at least one of the positive electrode and the negative electrode, in which fiber-attached mat contains a plurality of fibers covered with a sizing composition, a binding composition, and one or more additives. Patent Document 2 proposes the lead-acid battery in which the additives include one or more selected from a rubber additive, aldehyde, an aldehyde derivative, a metal salt, fatty alcohol ethioxylate (alkoxylated alcohol having a terminal OH group), an ethylene-propylene oxide block copolymer, sulfuric acid ester (alkyl sulfate and alkyl ether sulfate), sulfonic acid ester (alkyl and olefin sulfonates), phosphoric acid ester, sulfosuccinate, polyacrylic acid, polyaspartic acid, perfluoroalkyl sulfonic acid, polyvinyl alcohol, lignin, a lignin derivative, phenol formaldehyde resin, cellulose and wood flour, and the additive reduces water content loss in the lead-acid battery.

PRIOR ART DOCUMENTS

PATENT DOCUMENTS

Patent Document 1: JP-A-2003-242983
Patent Document 2: JP-A-2017-525092

SUMMARY OF THE INVENTION

PROBLEMS TO BE SOLVED BY THE INVENTION

As a factor of exhausting the life of a lead-acid battery, a case is known where a positive active material falls off due to softening caused by repetition of charge-discharge, leading to exhaustion of the life. In particular, in the case where deep discharge and charge are repeated, a short-circuit may occur which is caused when a moss-like positive active material falling off due to softening is curled up by generation of gas and deposited on the upper part of an element (hereinafter, referred to as a "moss short circuit"), leading to exhaustion of the life. For providing a lead-acid battery having a long life even in a use form in which the lead-acid battery is discharged until reaching a deep discharge state, it is necessary to effectively suppress such a moss short circuit.

MEANS FOR SOLVING THE PROBLEMS

A lead-acid battery according to one aspect of the present invention includes a negative electrode plate, a positive electrode plate and an electrolyte solution, in which the negative electrode plate includes a negative electrode material, the positive electrode plate includes a positive electrode current collector and a positive electrode material, the negative electrode material contains a polymer compound having a peak in a range of 3.2 ppm or more and 3.8 ppm or less in a chemical shift of a $^1$H-NMR spectrum measured using deuterated chloroform as a solvent, a content of the polymer compound in the negative electrode material is 600 ppm or less on a mass basis, and an arithmetic average roughness Ra of a surface of the positive electrode current collector is 2 $\mu$m or more.

A lead-acid battery according to another aspect of the present invention includes a negative electrode plate, a positive electrode plate and an electrolyte solution, in which the negative electrode plate includes a negative electrode material, the positive electrode plate includes a positive electrode current collector and a positive electrode material, the negative electrode material contains a polymer compound having a repeating structure of oxy $C_{2-4}$ alkylene units, a content of the polymer compound in the negative electrode material is 600 ppm or less on a mass basis, and an arithmetic average roughness Ra of a surface of the positive electrode current collector is 2 $\mu$m or more.

BRIEF DESCRIPTION OF THE DRAWINGS

Fig. 1 is a partially cutaway exploded perspective view showing an appearance and an internal structure of a lead-acid battery according to one aspect of the present invention.
Fig. 2A is a graph obtained by plotting a change in deep discharge cycle number when the content of a polymer compound is changed for lead-acid batteries of examples and comparative examples.
Fig. 2B is a graph obtained by plotting a change in deep discharge cycle number when the surface roughness Ra of a positive electrode current collector is changed for lead-acid batteries of examples and comparative examples.

MODE FOR CARRYING OUT THE INVENTION

One aspect of the present invention is a lead-acid battery including a positive electrode plate, a negative electrode plate and an electrolyte solution. The negative electrode plate includes a negative electrode material. The positive electrode plate includes a positive electrode current collector and a positive electrode material. The negative electrode material contains a polymer compound having a peak in a range of 3.2 ppm or more and 3.8 ppm or less in a chemical shift of a $^1$H-NMR spectrum measured using deuterated chloroform as a solvent. The content of the polymer compound in the negative electrode material is 600 ppm or less on a mass basis. The arithmetic average roughness Ra of a surface of the positive electrode current collector is 2 $\mu$m or more.
Note that the peak appearing in a chemical shift in a range of 3.2 ppm or more and 3.8 ppm or less in the $^1$H-NMR spectrum is derived from an oxy $C_{2-4}$ alkylene unit.
The cause of softening and falling of the positive active material in the lead-acid battery may be that bonding between positive active material particles weakens and adhesion between the positive active material and the positive electrode current collector decreases due to charge-discharge, so that the positive electrode material is likely to peel off from the positive electrode current collector. Thus, falling of the positive active material may be suppressed by moderately increasing the surface roughness of the positive electrode current collector to improve adhesion between the active material and the current collector. However, when the surface roughness of the positive electrode current collector is increased, falling of the positive active material can be suppressed to some extent, but the amount of gas generation does not change, and therefore the effect of suppressing a moss short circuit is limited.
Meanwhile, the moss short circuit occurs when the moss-like positive active material that has softened and fallen off is curled up to the upper part of an element by gas generated in an overcharged state or a state close to full charge. Thus, by suppressing generation of gas by, for example, adding a material suppressing generation of gas to the negative electrode material, the moss short circuit can be suppressed. However, even when a material suppressing generation of gas is added to the negative electrode material, the effect of suppressing the moss short circuit may be limited because adhesion between the positive active material and the current collector does not change.
However, the inventors of the present application have found through intensive studies that by roughening a surface of the positive electrode current collector and adding a polymer compound to the negative electrode material, the moss short circuit is synergistically suppressed to dramatically improve the deep discharge cycle life when the surface roughness Ra of the positive electrode current collector is 2 $\mu$m or more. These findings are neither described nor suggested in documents.
The surface roughness Ra of the positive electrode current collector may be 2 $\mu$m or more, and is preferably 4 $\mu$m or more, from the viewpoint of improving adhesion to suppress peeling. On the other hand, the surface roughness Ra of the positive electrode current collector is preferably 50 $\mu$m or less, more preferably 10 $\mu$m or less, from the viewpoint of suppressing an increase in surface area of the positive electrode current collector, which causes an increase in contact area with the electrolyte solution, so that corrosion of the positive electrode current collector easily proceeds. The above-described lower limit and upper limit can be combined arbitrarily. The surface roughness Ra of the positive electrode current collector is determined by taking out the positive electrode plate from the lead-acid battery, and measuring the arithmetic average roughness Ra of a predetermined region of a surface of the positive electrode current collector using a surface roughness meter for the positive electrode plate from which the positive electrode material is removed to expose a surface of the positive electrode current collector as described later.
Another aspect of the present invention is a lead-acid battery including a positive electrode plate, a negative electrode plate and an electrolyte solution. The negative electrode plate includes a negative electrode material. The positive electrode plate includes a positive electrode current collector and a positive electrode material. The negative electrode material contains a polymer compound having a repeating structure of oxy $C_{2-4}$ alkylene units. The content of the polymer compound in the negative electrode material is 600 ppm or less on a mass basis. The arithmetic average roughness Ra of a surface of the positive electrode current collector is 2 $\mu$m or more. Even in this configuration, addition of a polymer compound to the negative electrode material effectively suppressed a moss short circuit, so that the deep discharge cycle life is dramatically improved.

The reason why in the lead-acid batteries according to one aspect and another aspect of the present invention, higher deep discharge life performance is obtained by adding a polymer compound may be as follows.

The polymer compound is likely to have a linear structure because it has a repeating structure of oxy $C_{2-4}$ alkylene units. Thus, the surface of lead can be thinly and widely covered with the polymer compound in the negative electrode material. Since the surface of lead is covered with the polymer compound over a wide range of the lead surface, a hydrogen overvoltage increases. As a result, charge acceptability is improved, and a side reaction which generates hydrogen hardly occurs during overcharge or charge. Accordingly, gas generation is suppressed, so that a moss short circuit hardly occurs even when deep discharge and charge are repeated. In addition, an effect of reducing a hydrogen generating reaction can be obtained even with a very small amount of the polymer compound, and therefore when the polymer compound is contained in the negative electrode material, the polymer compound can be present near lead, whereby a high adsorption action of the oxy $C_{2-4}$ alkylene unit on lead can be exhibited. In addition, when the surface roughness Ra of the positive electrode current collector is 2 $\mu$m or more, a moss short circuit is synergistically suppressed, so that significantly high deep discharge life performance can be obtained.

The above-described effect of the polymer compound is exhibited by covering the surface of lead with the polymer compound. Thus, it is important that the polymer compound is present in the vicinity of the lead in the negative electrode material, whereby the effect of the polymer compound can be effectively exhibited. Thus, it is important that the negative electrode material contains the polymer compound regardless of whether or not a component of the lead-acid battery other than the negative electrode material contains the polymer compound.

The content of the polymer compound in the negative electrode material is preferably 600 ppm or less. In this case, it is possible to reduce the possibility that the film of the polymer compound covering the surface of lead becomes thick, so that conversely, charge acceptability is deteriorated. The content of the polymer compound in the negative electrode material may be 30 ppm or more and 500 ppm or less on a mass basis. According to these aspects of the present invention, the effect of improving the deep discharge cycle life is more noticeable when the content of the polymer compound is in the above-mentioned range.

In the lead-acid batteries according to these aspects of the present invention, the polymer compound may contain an oxygen atom bonded to a terminal group and a -CH$_2$- group and/or a -CH< group bonded to the oxygen atom. In the $^1$H-NMR spectrum, a ratio of an integrated value of the peak of 3.2 ppm to 3.8 ppm to the sum of the integrated value of the peak of 3.2 ppm to 3.8 ppm, an integrated value of a peak of hydrogen atoms of the -CH$_2$- group bonded to the oxygen atom, and an integrated value of a peak of a hydrogen atom of the -CH< group bonded to the oxygen atom is preferably 85% or more. Such polymer compounds contain many oxy $C_{2-4}$ alkylene units in the molecule. Therefore, it is considered that the polymer compound easily adsorbs to lead and is likely to have a linear structure, so that it becomes easy to thinly cover the lead surface. Accordingly, the amount of gas generation is easily reduced, so that the effect of improving the deep discharge cycle life can be enhanced.

Here, in the $^1$H-NMR spectrum, the polymer compound having a peak in the chemical shift range of 3.2 ppm to 3.8 ppm may have a repeating structure of oxy $C_{2-4}$ alkylene units. According to these aspects of the present invention, it is considered that when a polymer compound having a repeating structure of oxy $C_{2-4}$ alkylene units is used, the polymer compound more easily adsorbs to lead, and is likely to have a linear structure, so that it becomes easy to thinly cover the lead surface. Accordingly, the amount of gas generation is more easily reduced, so that the effect of improving the deep discharge cycle life can be further enhanced.

Here, the polymer compound may contain at least one selected from the group consisting of a hydroxy compound having a repeating structure of the oxy $C_{2-4}$ alkylene units, an etherified product of the hydroxide compound, and an esterified product of the hydroxy compound, and

the hydroxy compound may be at least one selected from the group consisting of a poly $C_{2-4}$ alkylene glycol, a copolymer having a repeating structure of oxy $C_{2-4}$ alkylene, and a $C_{2-4}$ alkylene oxide adduct of a polyol. According to these aspects of the present invention, the amount of gas generation is more easily reduced and the effect of improving the deep discharge cycle life is high when such a polymer compound is used.

The polymer compound may have a repeating structure of oxypropylene units (-O-CH(-CH$_3$)-CH$_2$-). It is considered that such a polymer compound is inhibited from being thickly deposited on the lead surface while having high adsorptivity to lead, and has an excellent balance therebetween. Thus, the amount of gas generation can be more effectively reduced, and the effect of improving the deep discharge cycle life can be further enhanced.

The polymer compound may have one or more hydrophobic groups, and at least one of the hydrophobic groups may be a long-chain aliphatic hydrocarbon group having 8 or more carbon atoms. The action of such a hydrophobic group suppresses excessive covering of the lead surface with the polymer compound, so that it is easy to achieve both suppression of deterioration of charge acceptability and reduction of the amount of gas generation.

It is preferable that the polymer compound has a repeating structure of oxyethylene units. When the polymer compound has a repeating structure of oxyethylene units having high hydrophilicity, the polymer compound can be selectively adsorbed to lead. Due to the balance between the hydrophobic group and the hydrophilic group, the amount of gas generation can be more effectively reduced, and the effect of improving the deep discharge cycle life can be further enhanced. As such a polymer compound, at least one selected from the group consisting of polyethylene glycol oleate, polyethylene glycol dilaurate, polyethylene glycol distearate and polyethylene glycol dioleate may be used.

In the lead-acid battery, it is sufficient that the polymer compound can be contained in the negative electrode material, and the source of the polymer compound contained in the negative electrode material is not particularly limited. The polymer compound may be contained in any of the components (for example, a negative electrode plate, a positive electrode plate, an electrolyte solution and a separator) of the lead-acid battery when preparing the lead-acid battery. The polymer compound may be contained in one constituent element, or may be contained in two or more constituent elements (for example, a negative electrode plate and an electrolyte solution).

The lead-acid battery may be either a valve regulated (sealed) lead-acid battery (VRLA type lead-acid battery) or a flooded-type (vented type) lead-acid battery.

In the present specification, the average surface roughness of the positive electrode current collector, the average pore size of the negative electrode material, the content of each of the polymer compound and the organic expander in the negative electrode material, and the bulk density of the negative electrode material are determined for a negative electrode plate taken out from a lead-acid battery in a fully charged state.

(Description of terminology)

(Electrode material)

The negative electrode material and a positive electrode material are each usually held by the current collector. The electrode material is a portion of the electrode plate which excludes the current collector. A member such as a mat or a pasting paper may be stuck to the electrode plate. Such a member (also referred to as a sticking member) is used integrally with the electrode plate and is thus assumed to be included in the electrode plate. When the electrode plate includes the sticking member (such as a mat or a pasting paper), the electrode material is a portion of the electrode plate which excludes the current collector and the sticking member from the electrode plate.

Among positive electrode plates, a clad-type positive electrode plate includes a plurality of porous tubes, a spine inserted into each tube, a current collector connecting a plurality of spines, a positive electrode material with which a spine inserted tube is filled, and a spine protector connecting a plurality of tubes. In the clad-type positive electrode plate, the positive electrode material is a portion which excludes the tubes, the spines, the current collecting portion and the spine protector. In the clad-type positive electrode plate, the spine and the current collector may be collectively referred to as a positive current collector.

(Surface roughness)

The surface roughness Ra of the positive electrode current collector is an arithmetic average roughness Ra defined in JIS B 0601: 2001. The arithmetic average roughness Ra is measured using a surface roughness meter for a positive electrode current collector whose surface is exposed by removing the positive electrode material from the positive electrode plate of the lead-acid battery in the following procedure. The arithmetic average surface roughness Ra can be measured by using, for example, "VK-X100 LASER MICROSCOPE" manufactured by KEYENCE CORPORATION.

First, the lead-acid battery is disassembled to take out the positive electrode plate. The positive electrode plate taken out is subjected to mannitol treatment to remove the positive electrode material from the positive electrode plate. Thereafter, by washing with water, the positive electrode current collector freed of the positive electrode material is obtained.

The positive electrode current collector is divided into three parts in each of the vertical direction and the horizontal direction, so that the positive electrode current collector is divided into a total of nine regions (division into the nine regions does not necessarily require cutting the positive electrode plate). For each of the nine regions, at least one relatively flat portion to be measured is arbitrarily selected, and the arithmetic average roughness Ra of a surface at the portion to be measured is measured. The average value of arithmetic average roughnesses Ra of nine or more portions, which are measured by the above-described method, is defined as the surface roughness Ra of the positive electrode current collector. The portion to be measured includes a portion corresponding to the lateral rib and a portion corresponding to the longitudinal rib of the current collector.

(Polymer compound)

The polymer compound satisfies at least one of the following conditions (i) and (ii).

Condition (i)

The polymer compound has a peak in a range of 3.2 ppm or more and 3.8 ppm or less in a chemical shift of a $^1$H-NMR spectrum measured using deuterated chloroform as a solvent.

Condition (ii)

The polymer compound has a repeating structure of oxy $C_{2-4}$ alkylene units.
In (i), the peak appearing in the range of 3.2 ppm or more and 3.8 ppm or less is derived from the oxy $C_{2-4}$ alkylene unit. That is, the polymer compound satisfying the condition (ii) is also the polymer compound satisfying the condition (i). The polymer compound satisfying the condition (i) may have a repeating structure of monomer units other than the oxy $C_{2-4}$ alkylene unit, and may have a certain level of molecular weight. The number average molecular weight (Mn) of the polymer compound satisfying the above condition (i) or (ii) may be, for example, 300 or more.

(Oxy $C_{2-4}$ alkylene unit)

Note that the oxy $C_{2-4}$ alkylene unit is a unit represented by $-O-R^1-$ ($R^1$ represents a $C_{2-4}$ alkylene group.).

(Organic expander)

The organic expander refers to an organic compound among compounds having a function of suppressing shrinkage of lead as a negative active material when charge-discharge of the lead-acid battery is repeated.

(Number average molecular weight)

In the present description, the number average molecular weight (Mn) is determined by gel permeation chromatography (GPC). A standard substance used for determining Mn is polyethylene glycol.

(Fully charged state)

The fully charged state of the flooded-type lead-acid battery is defined by the definition of JIS D 5301: 2019. More specifically, the following state is defined as the fully charged state: the lead-acid battery is charged in a water bath at 25°C $\pm$ 2°C at a current (A) 0.2 times as large as a numerical value (numerical value whose unit is Ah) described as a rated capacity until a terminal voltage (V) during charge measured every fifteen minutes or an electrolyte solution density subjected to temperature correction to 20°C exhibits a constant value at three significant digits continuously three times. In the case of a valve regulated lead-acid battery, the fully charged state is a state where the lead-acid battery is subjected to constant current constant voltage charge of 2.23 V/cell at the current (A) 0.2 times as large as the numerical value (numerical value whose unit is Ah) described as the rated capacity in an air tank of 25°C $\pm$ 2°C, and the charge is completed when the charge current during constant voltage charge becomes a value (A) of 0.005 times as large as the numerical value (numerical value whose unit is Ah) described in the rated capacity.
The lead-acid battery in the full charge state refers to a lead-acid battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

(Up-down direction of lead-acid battery or components of lead-acid battery)

In the present specification, the up-down direction of the lead-acid battery or components (such as electrode plate, container, and separator) of the lead-acid battery means the up-down direction of the lead-acid battery in the vertical direction when the lead-acid battery is in use. Each of the positive electrode plate and the negative electrode plate includes a lug for connecting to an external terminal. In a horizontal valve regulated lead-acid battery or the like, the lug may be provided at a side portion of the electrode plate so as to protrude laterally; however, in many lead-acid batteries, the lug is usually provided at an upper portion of the electrode plate so as to protrude upward.

Hereinafter, the lead-acid battery according to an embodiment of the present invention will be described for each of the main constituent elements, but the present invention is not limited to the following embodiment.

[Lead-acid battery]

(Negative electrode plate)

The negative electrode plate usually includes a negative current collector in addition to a negative electrode material.

(Negative current collector)

The negative current collector may be formed by casting lead (Pb) or a lead alloy, or may be formed by processing a lead sheet or a lead alloy sheet. Examples of the processing method include expanding processing or punching processing. It is preferable to use the grid-like current collector as the negative current collector because the negative electrode material is easy to be supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug part of the negative current collector. The surface layer of the lug may contain Sn or an Sn alloy.

(Negative electrode material)

The negative electrode material contains the above polymer compound. The negative electrode material further contains a negative active material (specifically, lead or lead sulfate) that exhibits a capacity through a redox reaction. The negative electrode material may further contain an organic expander. The negative electrode material may contain at least one selected from the group consisting of a carbonaceous material and other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound)

The polymer compound has a peak in a range of 3.2 ppm or more and 3.8 ppm or less in a chemical shift of $^1$H-NMR spectrum. Such polymer compounds have oxy $C_{2-4}$ alkylene units. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one type or two or more types of such oxy $C_{2-4}$ alkylene units.

The polymer compound preferably has a repeating structure of oxy $C_{2-4}$ alkylene units. The repeating structure may contain one kind of oxy $C_{2-4}$ alkylene unit, or may contain two or more kinds of oxy $C_{2-4}$ alkylene units. The polymer compound may contain one type of the repeating structure or two or more kinds of repeating structures.

The polymer compound having a repeating structure of oxy $C_{2-4}$ alkylene units also includes polymer compounds classified as a surfactant (more specifically, a nonionic surfactant).

Examples of the polymer compound include hydroxy compounds having a repeating structure of oxy $C_{2-4}$ alkylene units (poly $C_{2-4}$ alkylene glycols, copolymers having a repeating structure of oxy $C_{2-4}$ alkylene, poly $C_{2-4}$ alkylene oxide adducts of a polyol, and the like), etherified or esterified products of these hydroxy compounds, and the like.

Examples of the copolymer include copolymers containing different oxy $C_{2-4}$ alkylene units. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane and polyhydroxynorbornane), and the like are preferable, and among them, aliphatic polyols are preferable. Examples of the aliphatic polyol include aliphatic diols, triols or higher polyols (for example, glycerin, trimethylolpropane, pentaerythritol, sugar or sugar alcohol, and the like), and the like. Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar or sugar alcohol include erythritol, xylitol, mannitol, sorbitol, and the like. The sugar or sugar alcohol may have either a chain structure or a cyclic structure.

In the polyalkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily take a linear structure, the polyol is preferably a diol.

The etherified product has an $-OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group). Among terminals of the polymer compound, some terminals may be etherified, or all terminals may be etherified. For example, one terminal of a main chain of the linear polymer compound may be an -OH group, and the other terminal may be an $-OR^2$ group.

The esterified product has an $-O-C(=O)-R^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^3$ is an organic group). Among terminals of the polymer compound, some terminals may be esterified, or all terminals may be esterified. For example, one terminal of a main chain of the linear polymer compound may be an -OH group, and the other terminal may be an $-O-C(=O)-R^3$ group.

Examples of each of the organic groups $R^2$ and $R^3$ include a hydrocarbon group. The hydrocarbon group may have a substituent (for example, a hydroxy group, an alkoxy group, and/or a carboxy group, and the like). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, an alkynyl group, or the like) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group, and a naphthyl group. Examples of the bisaryl group include monovalent groups corresponding to bisarene. Examples of the bisarene include biphenyl and bisarylalkanes (for example, bis $C_{6-10}$ aryl $C_{1-4}$ alkanes (such as 2,2-bisphenylpropane)).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), cycloalkenyl groups (cyclohexenyl group, cyclooctenyl group, and the like), and the like. The alicyclic hydrocarbon group also includes hydrogenated products of the aromatic hydrocarbon groups.

Among the hydrocarbon groups, an aliphatic hydrocarbon group is preferable from the viewpoint that the polymer compound easily adheres thinly to the lead surface. The aliphatic hydrocarbon group may be saturated or unsaturated. Examples of the aliphatic hydrocarbon group include an alkyl group, an alkenyl group, an alkynyl group, a dienyl group having two carbon-carbon double bonds, and a trienyl group having three carbon-carbon double bonds. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, 3 or more for a dienyl group, and 4 or more for a trienyl group, depending on the type of the aliphatic hydrocarbon group. Among them, an alkyl group and an alkenyl group are preferable from the viewpoint that the polymer compound easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-nonyl, n-decyl, i-decyl, undecyl, lauryl (dodecyl), tridecyl, myristyl, pentadecyl, cetyl, heptadecyl, stearyl, icosyl, henicosyl, and behenyl.

Specific examples of the alkenyl group include vinyl, 1-propenyl, allyl, cis-9-heptadecene-1-yl, palmitoleyl, and oleyl. An alkenyl group may be, for example, a $C_{2-30}$ alkenyl group or a $C_{2-26}$ alkenyl group, a $C_{2-22}$ alkenyl group or a $C_{2-20}$ alkenyl group, or a $C_{10-20}$ alkenyl group.

It is preferable that at least one selected from the group consisting of an etherified product of a hydroxy compound having a repeating structure of oxy $C_{2-4}$ alkylene units and an esterified product of a hydroxy compound having a repeating structure of oxy $C_{2-4}$ alkylene units are used among the polymer compounds because gas generation is suppressed, so that it is possible to further enhance the effect of suppressing the deterioration of charge acceptability. Even when these polymer compounds (P) are used, the amount of gas generation can be reduced. Among the above-mentioned polymer compounds, polymer compounds having a repeating structure of oxypropylene units, polymer compounds having a repeating structure of oxyethylene units, and the like are preferable.

The polymer compound may have one or more hydrophobic groups. Examples of the hydrophobic group include an aromatic hydrocarbon group, an alicyclic hydrocarbon group, and a long-chain aliphatic hydrocarbon group among the above-mentioned hydrocarbon groups. Examples of the long-chain aliphatic hydrocarbon group include aliphatic hydrocarbon groups having 8 or more carbon atoms among the above-described aliphatic hydrocarbon groups (such as alkyl groups and alkenyl groups). The number of carbon atoms in the aliphatic hydrocarbon group is preferably 12 or more, more preferably 16 or more. Among them, the polymer compound having a long-chain aliphatic hydrocarbon group is preferable because it hardly causes excessive adsorption to lead and the effect of suppressing the deterioration of the charge acceptability is further enhanced. The polymer compound may be a polymer compound in which at least one of the hydrophobic groups is a long-chain aliphatic hydrocarbon group. The number of carbon atoms of the long-chain aliphatic hydrocarbon group may be 30 or less, 26 or less, or 22 or less.

The number of carbon atoms of the long-chain aliphatic hydrocarbon group may be 8 or more (or 12 or more) and 30 or less, 8 or more (or 12 or more) and 26 or less, 8 or more (or 12 or more) and 22 or less, 10 or more and 30 or less (or 26 or less), or 10 or more and 22 or less.

Among the polymer compounds, a polymer compound having a hydrophilic group and a hydrophobic group corresponds to a nonionic surfactant. The repeating structure of oxyethylene units exhibits high hydrophilicity and can be a hydrophilic group in the nonionic surfactant. Thus, the polymer compound having a hydrophobic group preferably has a repeating structure of oxyethylene units. The polymer compound as described above can suppress excessive coverage of the surface of lead while being selectively adsorbed to lead due to a balance between hydrophobicity and high hydrophilicity due to the repeating structure of oxyethylene units, and thus, it is possible to further enhance the effect of suppressing the deterioration of the charge acceptability while reducing the amount of gas generation. The polymer compound as described above can ensure high adsorptivity to lead even with a relatively low molecular weight (for example, Mn is 1000 or less.).

Among the polymer compounds, a polyoxypropylene-polyoxyethylene block copolymer, an etherified product of a hydroxy compound having a repeating structure of oxyethylene units, an esterified product of a hydroxy compound having a repeating structure of oxyethylene units, and the like correspond to a nonionic surfactant.

In a polyoxypropylene-polyoxyethylene block copolymer or the like, the repeating structure of oxyethylene units corresponds to a hydrophilic group, and the repeating structure of oxypropylene units corresponds to a hydrophobic group. Such a copolymer is also encompassed by the polymer compound having a hydrophobic group.

Examples of the polymer compound having a hydrophobic group and having a repeating structure of oxyethylene units include etherified products of polyethylene glycol (such as alkyl ether), esterified products of polyethylene glycol (such as carboxylic acid ester), etherified products (such as alkyl ether) of a polyethylene oxide adduct of the polyol, esterified products of a polyethylene oxide adduct (such as carboxylic acid ester) of the polyol (such as polyols of triol or higher), and the like. Specific examples of the polymer compound as described above include polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether. However, the polymer compound is not limited thereto. Among them, use of an esterified product of polyethylene glycol, an esterified product of a polyethylene oxide adduct of the polyol, and the like is preferable because higher charge acceptability can be secured and the amount of gas generation can be remarkably reduced.

For polymer compounds classified as surfactants, the HLB of the polymer compound is preferably 4 or more, more preferably 4.3 or more from the viewpoint of more easily reducing the reduction amount of the electrolyte solution. From the viewpoint of easily securing higher charge acceptability, the HLB of the polymer compound is preferably 18 or less, more preferably 10 or less or 9 or less, still more preferably 8.5 or less.

The HLB of the polymer compound may be 4 or more (or 4.3 or more) and 18 or less, or 4 or more (or 4.3 or more) and 10 or less. From the viewpoint of achieving an excellent balance between reduction of the amount of gas generation and improvement of charge acceptability, the HLB of the polymer compound is preferably 4 or more (or 4.3 or more) and 9 or less, or 4 or more (or 4.3 or more) and 8.5 or less.

From the viewpoint of further enhancing the effect of suppressing gas generation and easily securing higher charge acceptability, the case where the repeating structure of oxy $C_{2-4}$ alkylene includes at least a repeating structure of oxypropylene units is also preferable. In this case, although the charge acceptability tends to be lower than that in the case of the repeating structure of oxyethylene units, even in this case, high charge acceptability can be secured while the amount of gas generation is kept low. The polymer compound containing the oxypropylene unit has peaks derived from -CH< and -CH$_2$- of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of $^1$H-NMR spectrum. The peak in the range of 3.2 ppm or more and 3.42 ppm or less is derived from -CH$_2$-, and the peak in the range of more than 3.42 ppm and 3.8 ppm or less is derived from -CH< and -CH$_2$-.

Examples of the polymer compound containing at least a repeating structure of oxypropylene units include polypropylene glycol, a copolymer having a repeating structure of oxypropylene units, a polypropylene oxide adduct of the polyol, etherified or esterified products thereof, and the like. Examples of the copolymer include an oxypropylene-oxyalkylene copolymer (provided that oxyalkylene is C$_{2-4}$ alkylene other than oxypropylene) and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be referred to as a polyoxypropylene-polyoxyalkylene copolymer (for example, a polyoxypropylene-polyoxyethylene copolymer). The oxypropylene-oxyalkylene copolymer may be a block copolymer (for example, a polyoxypropylene-polyoxyethylene block copolymer). Examples of the etherified product include polypropylene glycol alkyl ether, alkyl ether of an oxypropylene-oxyalkylene copolymer (such as alkyl ether of polyoxypropylene-polyoxyethylene copolymer), and the like. Examples of the esterified product include polypropylene glycol ester of carboxylic acid, carboxylic acid ester of an oxypropylene-oxyalkylene copolymer (such as carboxylic acid ester of polyoxypropylene-polyoxyethylene copolymer), and the like.

Examples of the polymer compound containing at least a repeating structure of oxypropylene units include polypropylene glycol, a polyoxypropylene-polyoxyethylene copolymer (such as a polyoxypropylene-polyoxyethylene block copolymer), a polyoxyethylene-polyoxypropylene alkyl ether (such as alkyl ether (such as butyl ether) in which the R2 is an alkyl having 10 or less carbon atoms (or 8 or less or 6 or less carbon atoms)), a polypropylene glycol carboxylate (such as polypropylene glycol carboxylate (such as polypropylene glycol acetate) in which the R$^3$ is an alkyl having 10 or less carbon atoms (or 8 or less or 6 or less carbon atoms)), and a polypropylene oxide adduct of polyol of triol or higher (such as polypropylene oxide adduct of glycerin). However, the polymer compound is not limited thereto.

In the polymer compound having a repeating structure of oxypropylene units, the proportion of the oxypropylene unit is, for example, 5 mol% or more, and may be 10 mol% or more or 20 mol% or more. The proportion of the oxypropylene unit is, for example, 100 mol% or less. In the copolymer, the proportion of the oxypropylene unit may be 90 mol% or less, 75 mol% or less, or 60 mol% or less.

In the polymer compound containing a repeating structure of oxypropylene units, the proportion of the oxypropylene unit may be 5 mol% or more and 100 mol% or less (or 90 mol% or less), 10 mol% or more and 100 mol% or less (or 90 mol% or less), 20 mol% or more and 100 mol% or less (or 90 mol% or less), 5 mol% or more and 75 mol% or less (or 60 mol% or less), 10 mol% or more and 75 mol% or less (or 60 mol% or less), or 20 mol% or more and 75 mol% or less (or 60 mol% or less).

It is preferable that the polymer compound contains a large amount of oxy C$_{2-4}$ alkylene units from the viewpoint of enhancing adsorptivity of the polymer compound to lead and making it easy for the polymer compound to have a linear structure. Such a polymer compound includes, for example, an oxygen atom bonded to a terminal group and a -CH$_2$- group and/or a -CH< group bonded to the oxygen atom. In the $^1$H-NMR spectrum of the polymer compound, the ratio of the integrated value of the peak of 3.2 ppm to 3.8 ppm to the sum of the integrated value of the peak of 3.2 ppm to 3.8 ppm, the integrated value of the peak for the hydrogen atoms of the - CH$_2$- group and the integrated value of the peak for the hydrogen atom of the -CH< group increases. This ratio is, for example, 50% or more, and may be 80% or more. From the viewpoint of further enhancing the effect of reducing the amount of gas generation and easily securing higher charge acceptability, the above ratio is preferably 85% or more, and more preferably 90% or more. For example, when the polymer compound has an -OH group at a terminal and also has a -CH$_2$- group and/or a -CH< group bonded to an oxygen atom of the -OH group, in the $^1$H-NMR spectrum, the peaks of the hydrogen atoms of the -CH$_2$- group and/or the -CH< group have a chemical shift in a range of more than 3.8 ppm and 4.0 ppm or less.

The negative electrode material may contain one kind or two or more kinds of polymer compounds.

The polymer compound may include, for example, a compound having Mn of 5,000,000 or less, 3,000,000 or less, or 2,000,000 or less, 500,000 or less, or 100,000 or less, or 50,000 or less or 20,000 or less. From the viewpoint of reducing the thickness of a film of the polymer compound covering the surfaces of lead and lead sulfate, so that higher charge acceptability is secured, the polymer compound preferably contains a compound having Mn of 10,000 or less, may contain 5,000 or less, 4,000 or less, 3,000 or less or 2,500 or less. From the viewpoint of further enhancing the effect of reducing the amount of gas generation, Mn of such a compound is preferably 300 or more and 10,000 or less. As the polymer compound, two or more compounds having different Mn may be used. That is, the polymer compound may have a plurality of peaks of Mn in the distribution of the molecular weight.

The content of the polymer compound in the negative electrode material is, for example, 8 ppm or more and may be 10 ppm or more on a mass basis. From the viewpoint of reducing the amount of gas generation to enhance the deep discharge cycle life, the content of the polymer compound in the negative electrode material is preferably 20 ppm or more, more preferably 30 ppm or more on a mass basis. The content of the polymer compound in the negative electrode material is 600 ppm or less and may be 500 ppm or less on a mass basis from the viewpoint of maintaining high charge acceptability. From the viewpoint of easily securing higher charge acceptability, the content of the polymer compound in the negative electrode material is preferably 400 ppm or less, more preferably 300 ppm or less on a mass basis.

The content (mass basis) of the polymer compound in the negative electrode material may be 8 ppm or more (or 10 ppm or more) and 600 ppm or less, 8 ppm or more (or 10 ppm or more) and 500 ppm or less, 8 ppm or more (or 10 ppm or more) and 400 ppm or less, 8 ppm or more (or 10 ppm or more) and 300 ppm or less, 20 ppm or more (or 30 ppm or more) and 600 ppm or less, 20 ppm or more (or 30 ppm or more) and 500 ppm or less, 20 ppm or more (or 30 ppm or more) and 400 ppm or less, or 20 ppm or more (or 30 ppm or more) and 300 ppm or less.

(Organic expander)

The organic expanders are generally roughly classified into lignin compounds and synthetic organic expanders. It can also be said that the synthetic organic expander is an organic expander other than lignin compounds. Examples of the organic expander contained in the negative electrode material include a lignin compound, a synthetic organic expander, and the like. The negative electrode material may contain one kind or two or more kinds of organic expanders.

Examples of the lignin compounds include lignin, lignin derivatives, and the like. Examples of the lignin derivative include lignin sulfonic acid or salts thereof (such as alkali metal salts (sodium salts and the like)), and the like.

The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt.

At least a lignin compound may be used as the organic expander. Charge acceptability tends to be lower in a case where a lignin compound is used compared to a case where a synthetic organic expander is used. However, since the negative electrode material contains a specific polymer compound, even when a lignin compound is used as the organic expander, the deterioration of the charge acceptability is suppressed, and high charge acceptability can be secured.

As the organic expander, the case of using a condensate containing at least a unit of an aromatic compound is also preferable. Examples of such a condensate include a condensate of an aromatic compound with an aldehyde compound (such as at least one selected from the group consisting of aldehydes (for example, formaldehyde) and condensates thereof). The organic expander may contain a unit of one kind of an aromatic compound or a unit of two or more kinds of aromatic compounds.

Note that the unit of an aromatic compound refers to a unit derived from an aromatic compound incorporated in a condensate.

Examples of the aromatic ring of the aromatic compound include a benzene ring, a naphthalene ring, and the like. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (biphenyl, bisphenylalkane, bisphenylsulfone, and the like). Examples of the aromatic compound include compounds having the aromatic ring, and at least one selected from the group consisting of a hydroxy group and an amino group. The hydroxy group or the amino group may be directly bonded to the aromatic ring, or may be bonded as an alkyl chain having a hydroxy group or an amino group. Note that the hydroxy group also includes salts of hydroxy group (-OMe). The amino group also includes salts of an amino group (specifically, salts with anions). Examples of Me include alkali metals (Li, K, Na, and the like), Group 2 metals of the periodic table (Ca, Mg, and the like), and the like.

As the aromatic compound, bisarene compounds [bisphenol compounds, hydroxybiphenyl compounds, bisarene compounds having an amino group (bisarylalkane compounds having an amino group, bisarylsulfone compounds having an amino group, biphenyl compounds having an amino group, and the like), hydroxyarene compounds (hydroxynaphthalene compounds, phenol compounds, and the like), aminoarene compounds (aminonaphthalene compounds, aniline compounds (aminobenzenesulfonic acid, alkylaminobenzenesulfonic acid, and the like), and the like], and the like] are preferable. The aromatic compound may further have a substituent. The organic expander may contain one or more or a plurality of residues of these compounds. As the bisphenol compound, bisphenol A, bisphenol S, bisphenol F, and the like are preferable.

The condensate preferably contains a unit of an aromatic compound having at least a sulfur-containing group. In particular, use of a condensate containing at least a unit of a bisphenol compound having a sulfur-containing group is advantage in securing higher charge acceptability. From the viewpoint of enhancing the effect of reducing the amount of overcharge, it is also preferable to use a condensate from an aldehyde compound of a naphthalene compound having at least one selected from the group consisting of a sulfur-containing group and having a hydroxy group and/or an amino group with an aldehyde compound.

The sulfur-containing group may be directly bonded to the aromatic ring contained in the compound, and for example, may be bonded to the aromatic ring as an alkyl chain having a sulfur-containing group. The sulfur-containing group is not particularly limited, and examples thereof include a sulfonyl group, a sulfonic acid group or a salt thereof, and the like.

In addition, as the organic expander, for example, a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable.

The content of the organic expander contained in the negative electrode material is, for example, 0.005 mass% or more and may be 0.01 mass% or more. When the content of the organic expander is in such a range, a high low-temperature high-rate discharge capacity can be secured. The content of the organic expander is, for example, 1.0 mass% or less and may be 0.5 mass% or less. From the viewpoint of further enhancing the effect of suppressing the deterioration of the charge acceptability, the content of the organic expander is preferably 0.3 mass% or less, more preferably 0.25 mass% or less, still more preferably 0.2 mass% or less or 0.15 mass% or less, and may be 0.12 mass% or less.

The content of the organic expander contained in the negative electrode material may be 0.005 mass% or more (or 0.01 mass% or more) and 1.0 mass% or less, 0.005 mass% or more (or 0.01 mass% or more) and 0.5 mass% or less, 0.005 mass% or more (or 0.01 mass% or more) and 0.3 mass% or less, 0.005 mass% or more (or 0.01 mass% or more) and 0.25 mass% or less, 0.005 mass% or more (or 0.01 mass% or more) and 0.2 mass% or less, 0.005 mass% or more (or 0.01 mass% or more) and 0.15 mass% or less, or 0.005 mass% or more (or 0.01 mass% or more) and 0.12 mass% or less.

(Carbonaceous material)

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbonaceous material including a graphitetype crystal structure and may be either artificial graphite or natural graphite. The negative electrode material may contain one kind or two or more kinds of carbonaceous materials.

The content of the carbonaceous material in the negative electrode material is, for example, 0.05 mass% or more and may be 0.10 mass% or more. The content of the carbonaceous material is, for example, 5 mass% or less and may be 3 mass% or less.

The content of the carbonaceous material in the negative electrode material may be 0.05 mass% or more and 5 mass% or less, 0.05 mass% or more and 3 mass% or less, 0.10 mass% or more and 5 mass% or less, or 0.10 mass% or more and 3 mass% or less.

(Barium sulfate)

The content of barium sulfate in the negative electrode material is, for example, 0.05 mass% or more and may be 0.10 mass% or more. The content of barium sulfate in the negative electrode material is, for example, 3 mass% or less and may be 2 mass% or less.

The content of barium sulfate in the negative electrode material may be 0.05 mass% or more and 3 mass% or less, 0.05 mass% or more and 2 mass% or less, 0.10 mass% or more and 3 mass% or less, or 0.10 mass% or more and 2 mass% or less.

(Analysis of negative electrode material or constituent components)

Hereinafter, a method of analyzing the negative electrode material or constituent components thereof will be described. Prior to measurement or analysis, the lead-acid battery in the fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 $\pm$ 5°C in a reduced pressure environment for about six hours. After drying, when the negative electrode plate includes a sticking member, the sticking member is removed by peeling. Next, the negative electrode material is separated from the negative electrode plate to obtain a sample (hereinafter referred to as sample A). The sample A is ground as necessary and subjected to analysis.

(1) Analysis of polymer compound

(1-1) Qualitative analysis of polymer compound

(a) Analysis of oxy C2-4 alkylene unit

Ground sample A is used. 150.0 $\pm$0.1 mL of chloroform is added to 100.0 $\pm$ 0.1 g of the sample A, and the mixture is stirred at 20 $\pm$ 5°C for sixteen hours to extract the polymer compound. Thereafter, the solid content is removed by filtration. For a chloroform solution in which the polymer compound obtained by the extraction is dissolved or the polymer compound obtained by drying the chloroform solution, for example, information is obtained from at least one selected from an infrared spectroscopic spectrum, an ultraviolet-visible absorption spectrum, an NMR spectrum, and LC-MS and pyrolysis GC-MS to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.
Observation frequency: 395.88 MHz
Pulse width: 6.30 $\mu$s
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the -$CH_2$- group and the -CH< group bonded to the oxygen atom bonded to the terminal group of the polymer compound, the sum ($V_2$) of integrated values of peaks in the $^1$H-NMR spectrum is determined. Then, from $V_1$ and $V_2$, a ratio of $V_1$ to the sum of $V_1$ and $V_2$ (= $V_1/(V_1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in a range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(b) Analysis of hydrophobic group in esterified product

When the polymer compound is an esterified product of a hydroxy compound, a predetermined amount of the polymer compound obtained by drying a chloroform solution in which the polymer compound obtained by extraction is dissolved in (a) is taken, and an aqueous potassium hydroxide solution is added. This saponifies the esterified product to generate a fatty acid potassium salt and a hydroxy compound. The water-soluble aqueous potassium solution is added until completion of the saponification. To the resulting mixture, methanol and a solution of boron trifluoride are added, and the mixture is stirred to convert the fatty acid potassium salt into fatty acid methyl ester. The resulting mixture is analyzed by pyrolysis GC-MS under the following conditions to identify a hydrophobic group contained in the esterified product.

Analyzer: high-performance general-purpose gas chromatogram GC-2014 manufactured by Shimadzu Corporation
Column: DEGS (diethylene glycol succinic acid ester) 2.1 m
Oven temperature: 180 to 120°C
Inlet temperature: 240°C

Detector temperature: 240°C
Carrier gas: He (flow rate: 50 mL/min)
Injection amount: 1 pL to 2 pL

(c) Analysis of hydrophobic group in etherified product

When the polymer compound is an etherified product of a hydroxy compound, a predetermined amount of the polymer compound obtained by drying a chloroform solution in which the polymer compound obtained by extraction is dissolved in (a) is taken, and hydrogen iodide is added. This generates an iodide ($R^3I$) corresponding to the organic group of the ether moiety of the polymer compound ($R^3$ described above), and also produces a diiodo $C_{2-4}$ alkane corresponding to the oxy $C_{2-4}$ alkylene unit. The hydrogen iodide is added in an amount sufficient to complete conversion of the etherified to the iodide and the diiodo $C_{2-4}$ alkane. The resulting mixture is analyzed by pyrolysis GC-MS under the same conditions as in (b) to identify a hydrophobic group present in the esterified product.

(1-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1,000,000$$

wherein $M_a$ is a molecular weight of a structure showing a peak in a chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.
Since the reference substance in this analysis is TCE, $N_r$ = 2 and $M_r$ = 168. In addition, m = 100.
For example, when the polymer compound is polypropylene glycol, $M_a$ is 58, and $N_a$ is 3. When the polymer compound is polyethylene glycol, $M_a$ is 44, and $N_a$ is 4. In the case of a copolymer, $N_a$ and $M_a$ are values obtained by averaging $N_a$ values and $M_a$ values, respectively, of each monomer unit using a molar ratio (mol%) of each monomer unit contained in the repeating structure.
In the quantitative analysis, the integrated value of the peak in the $^1$H-NMR spectrum is determined using data processing software "ALICE" manufactured by JEOL Ltd.

(1-3) Measurement of Mn of polymer compound

Using the chloroform soluble component, GPC measurement of the polymer compound is performed under the following conditions using the following apparatuses. Separately, a calibration curve (standard curve) is prepared from a plot of Mn of the standard substance and elution time. The Mn of the polymer compound is calculated based on the standard curve and the GPC measurement result of the polymer compound. However, the esterified product, the etherified product, and the like may be decomposed in the chloroform soluble component.

Analysis system: 20A system (manufactured by Shimadzu Corporation)

Column: two columns of GPC KF-805L (manufactured by Shodex) connected in series
Temperature: 30°C $\pm$ 1°C
Mobile phase: tetrahydrofuran
Flow rate: 1 mL/min.
Concentration: 0.20 mass%
Injection amount: 10 μL
Standard substance: polyethylene glycol (Mn = 2,000,000, 200,000, 20,000, 2,000, 200)
Detector: differential refractive index detector (Shodex RI-201H, manufactured by Shodex)

(2) Analysis of organic expander

(2-1) Qualitative analysis of organic expander in negative electrode material

The pulverized sample A is immersed in a 1 mol/L sodium hydroxide aqueous solution to extract the organic expander. Next, insoluble components are removed from the extract by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is determined from a combination of information obtained from, for example, an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, or pyrolysis GC-MS enabling acquirement of information of individual compounds forming a substance.

(2-2) Quantitative determination of content of organic expander in negative electrode material

Similarly to (2-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using a separately available organic polymer in which the ultraviolet-visible absorption spectrum, the infrared spectroscopic spectrum, the NMR spectrum, and the like exhibit similar shapes with respect to the organic expander extracted from the negative electrode of the battery.

(2-3) Content of sulfur element in organic expander

Similarly to (2-1) above, after the sample B of the organic expander is obtained, sulfur element in 0.1 g of the organic expander is converted into sulfuric acid by an oxygen combustion flask method. At this time, the sample B is burned in a flask containing an adsorbent to obtain an eluate in which sulfate ions are dissolved in the adsorbent. Next, the eluate is titrated with barium perchlorate using thorin as an indicator to determine the content (c1) of the sulfur element in 0.1 g of the organic expander. Next, c1 is multiplied by 10 to calculate the content ($\mu$mol/g) of the sulfur element in the organic expander per 1 g.

(Others)

The negative electrode plate can be formed in such a manner that a negative current collector is coated or filled with a negative electrode paste, which is then cured and dried to fabricate a non-formed negative electrode plate, and thereafter, the non-formed negative electrode plate is formed. The negative electrode paste is prepared, for example, by adding water and sulfuric acid (or sulfuric acid aqueous solution) to a lead powder, the polymer compound, and if necessary, at least one selected from the group consisting of an organic expander, a carbonaceous material, and other additives, and mixing the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

The positive electrode plate of a lead-acid battery can be classified into a paste type, a clad type, and the like. Either a paste-type or a clad-type positive electrode plate may be used. The paste-type positive electrode plate includes a positive current collector and a positive electrode material. The configuration of the clad-type positive electrode plate is as described above.

The positive current collector may be formed by casting lead (Pb) or a lead alloy, or may be formed by processing a lead sheet or a lead alloy sheet. Examples of the processing method include expanding processing and punching processing. It is preferable to use a grid-shaped current collector as the positive electrode current collector because the positive electrode material is easy to be supported.

As a lead alloy used for the positive current collector, a Pb-Sb alloy, a Pb-Ca alloy, or a Pb-Ca-Sn alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid part, only on the lug part, or only on the frame rib part of the positive current collector. For enhancing adhesion between the positive electrode material and the positive electrode current collector to inhibiting the positive electrode material from peeling from the positive electrode current collector and falling from the positive electrode plate, a surface of the positive electrode current collector is roughened to the extent that the arithmetic average roughness Ra thereof is 2 $\mu$m or more. In the case of an expanded grid or a punched current collector, for example, the roughening can be performed by pressing a plate having fine irregular portions against a surface of a lead or lead alloy sheet before processing or a surface of the current collector after processing, or by blasting the surface of the current collector. In this case, the roughening may be performed on the sheet-shaped current collector before processing, or may be performed during or after processing of the current collector. In the case of a cast current collector, the roughening can be efficiently performed by providing irregularities on a surface of a mold used in casting.

The positive electrode material contained in the positive electrode plate contains a positive active material (lead dioxide or lead sulfate) that exhibits a capacity through a redox reaction. The positive electrode material may optionally contain another additive.

A non-formed paste-type positive electrode plate is obtained by filling a positive current collector with a positive electrode paste, and curing and drying the paste. The positive electrode paste is prepared by mixing lead powder, an additive, water, and sulfuric acid. A non-formed clad-type positive electrode plate is formed by filling a porous tube, into which a spine connected by a current collector is inserted with a lead powder or a slurrylike lead powder, and joining a plurality of tubes with a spine protector. Thereafter, the positive electrode plate is obtained by forming the non-formed positive electrode plates.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

(Separator)

The separator can be disposed between the negative electrode plate and the positive electrode plate. As the separator, at least one selected from a nonwoven fabric and a microporous membrane, and the like are used.

The nonwoven fabric is a mat in which fibers are intertwined without being woven and is mainly made of fibers. In the nonwoven fabric, for example, 60 mass% or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among them, glass fibers are preferable. The nonwoven fabric may include components such as acidresistant inorganic powder and a polymer as a binder, in addition to fibers.

On the other hand, the microporous film is a porous sheet mainly made of components except for fiber components and is obtained by, for example, extrusion molding a composition containing, for example, a pore-forming additive into a sheet shape and then removing the pore-forming additive to form pores. The microporous film is preferably formed of a material having acid resistance, and is preferably a microporous film composed mainly of a polymer component. As the polymer component, a polyolefin (a polyethylene, a polypropylene, etc.) is preferable. Examples of the pore-forming additive include at least one selected from the group consisting of a polymer powder and oil.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the bent part may be parallel to the horizontal direction), and the separator may be disposed such that the folded part is along the vertical direction (e.g., such that the bent part is parallel to the vertical direction). In the separator folded in the bellows shape, recesses are alternately formed on both main surface sides of the separator. Since the lugs are usually formed on the upper portion of the positive electrode plate and the negative electrode plate, when the separator is disposed such that the folded portions are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded part is along the vertical direction of the lead-acid battery, the positive electrode plate can be housed in the recess on one main surface side, and the negative electrode plate can be housed in the recess on the other main surface side (i.e., the separator can be interposed singly between the adjacent positive electrode plate and negative electrode plate). When the bag-shaped separator is used, the bag-shaped separator may house the positive electrode plate or may house the negative electrode plate.

(Electrolyte solution)

The electrolyte solution is an aqueous solution containing sulfuric acid and may be gelled as necessary.

The polymer compound may be contained in the electrolyte solution.

The electrolyte solution may contain cations (for example, metal cations) and/or anions (for example, anions other than sulfate anions (such as phosphate ions)) if necessary. Examples of the metal cation include at least one selected from the group consisting of a Na ion, a Li ion, a Mg ion, and an Al ion.

The specific gravity of the electrolyte solution in the lead-acid battery in a fully charged state at 20°C is, for example, 1.20 or more and may be 1.25 or more. The specific gravity of the electrolyte solution at 20°C is 1.35 or less and preferably 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

(Others)

The lead-acid battery can be obtained by a manufacturing method including a step of storing an element and an electrolyte solution in a cell chamber of a container. Each cell of the lead-acid battery includes an element and an electrolyte solution stored in each cell chamber. The element is assembled by stacking a positive electrode plate, a negative electrode plate, and a separator such that the separator is interposed between the positive electrode plate and the negative electrode plate prior to storage in the cell chamber. The positive electrode plate, the negative electrode plate, the electrolyte solution, and the separator are each prepared prior to assembly of the element. A method of manufacturing the lead-acid battery may include a step of forming at least one of the positive electrode plate and the negative electrode plate as necessary after a step of storing the element and the electrolyte solution in the cell chamber.

The number of electrode plates in the element may be one or two or more. When, in the case where the element includes two or more positive electrode plates and two or more negative electrode plates, the conditions are satisfied that in at least one positive electrode plate, the arithmetic average roughness Ra of a surface of the positive electrode current collector is 2 $\mu$m or more, and in at least one negative electrode plate, the negative electrode material contains the polymer compound in an amount of 600 mass ppm or less, gas generation is suppressed, so that an effect of suppressing a moss short circuit is obtained, and the effect of suppressing a moss short circuit is enhanced as a function of the number of such negative electrode plates and positive electrode plates, in a cell including this element. From the viewpoint of further suppressing gas generation to secure a high effect of suppressing a moss short circuit, it is preferable that the arithmetic average roughness Ra of a surface of the positive electrode current collector is 2 $\mu$m or more in 50% or more (more preferably 80% or more or 90% or more) of the number of positive electrode plates in the element, and the negative electrode material contains the polymer compound in the above-described amount in 50% or more (more preferably 80% or more or 90% or more) of the number of negative electrode plates in the element. The proportion of the positive electrode plates satisfying the above-described condition in the positive electrode plates in the element is 100% or less. Among the negative electrode plates in the element, a ratio of the negative electrode plates satisfying the above conditions is 100% or less. All positive electrode plates and negative electrode plates in the element may satisfy the above conditions.

When the lead-acid battery has two or more cells, the elements of at least a part of the cells may include a positive electrode plate and a negative electrode plate satisfying the conditions described above. From the viewpoint of further suppressing gas generation to secure a high effect of suppressing a moss short circuit, it is preferable to provide an element including a positive electrode plate and a negative electrode plate in which 50% or more (more preferably 80% or more or 90% or more) of the number of cells in the lead-acid battery satisfy the above-described conditions. In the cells in the lead-acid battery, a proportion of cells including the element including a positive electrode plate and a negative electrode plate satisfying the above-described conditions is 100% or less. It is preferable that all elements in the lead-acid battery include the negative electrode plate satisfying the above conditions.

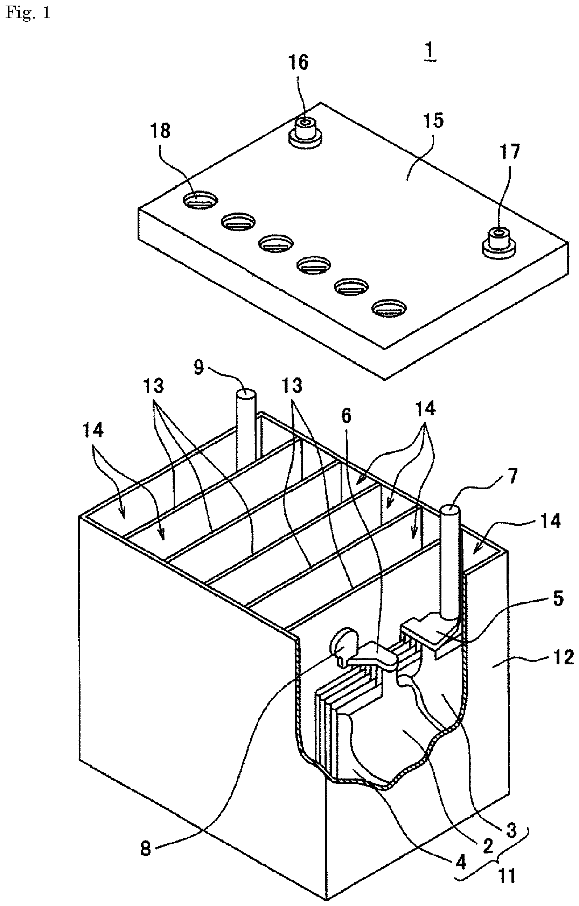

Fig. 1 shows an appearance of an example of a lead-acid battery according to an embodiment of the present invention.

A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 accommodating the negative electrode plate 2 is illustrated, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each penetrating connection body 8 passes through a through-hole made in the partition 13 to connect the elements 11 of the adjacent cell chambers 14 in series.

The positive electrode shelf 5 is formed by welding the lug parts, provided on the upper parts of the respective positive electrode plates 3, to each other by a cast-on-strap method or a burning method. The negative electrode shelf 6 is also formed by welding the lug parts, provided on the upper parts of the respective negative electrode plates 2, to each other in accordance with the case of the positive electrode shelf 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

In the present specification, the deep discharge cycle life is evaluated by the following procedure. A test battery used for the evaluation has a rated voltage of 2 V/cell and a rated twenty-hour rate capacity of 60 Ah.

(a) Deep discharge cycle life

Using the test battery, evaluation is performed under the following conditions.

In accordance with the "Endurance in cycle test with 50% depth of discharge at 40 °C and the preceded deep discharge" test specified in EN 50432 -6: 2015", the following discharge 1 and charge 1 are repeatedly performed in a water tank at 40°C $\pm$ 2°C.

(Discharge 1)

A current (A) that is 0.05 times the numerical value (numerical value in Ah) described in the rated capacity is defined as a twenty-hour rate current $I_{20}$. Discharge is performed for 2 hours at a constant current that is five times $I_{20}$.

(Charge 1)

Charge is performed at a voltage of 2.6 V/cell for 5 hours with the charge current limited to five times $I_{20}$. However, charge is ended at the time when the amount of charge reaches 0.54 times the rated twenty-hour capacity. If the amount of charge does not reach 0.54 times the rated twenty-hour capacity even after charge for 5 hours, charge at a constant current of $I_{20}$ is performed for maximum 1 hour until the amount of charge reaches 0.54 times the rated twenty-hour capacity.

The test is ended at the time when the voltage after charge 1 becomes 1.67 V/cell or less. The number of repetitions of discharge 1 and charge 1 up to this time is defined as a deep discharge cycle number, and the deep discharge cycle life is evaluated on the basis of this cycle number.

The lead-acid battery according to one aspect of the present invention will be described below.

(1) A lead-acid battery including a negative electrode plate, a positive electrode plate and an electrolyte solution, in which the negative electrode plate includes a negative electrode material, the positive electrode plate includes a positive electrode current collector and a positive electrode material, the negative electrode material contains a polymer compound having a peak in a range of 3.2 ppm or more and 3.8 ppm or less in a chemical shift of a $^1$H-NMR spectrum measured using deuterated chloroform as a solvent, a content of the polymer compound in the negative electrode material is 600 ppm or less on a mass basis, and an arithmetic average roughness Ra of a surface of the positive electrode current collector is 2 $\mu$m or more.

(2) In (1), the polymer compound may contain an oxygen atom bonded to a terminal group and a -CH$_2$- group and/or a -CH< group bonded to the oxygen atom, and in the $^1$H-NMR spectrum, a ratio of an integrated value of the peak to a sum of the integrated value of the peak, an integrated value of a peak of a hydrogen atom of the -CH$_2$- group, and an integrated value of a peak of a hydrogen atom of the -CH< group may be 50% or more, 80% or more, 85% or more, or 90% or more.

(3) In (1) or (2), the polymer compound may have a repeating structure of oxy C$_{2-4}$ alkylene units.

(4) A lead-acid battery including a negative electrode plate, a positive electrode plate and an electrolyte solution, in which the negative electrode plate includes a negative electrode material, the positive electrode plate includes a positive electrode current collector and a positive electrode material, the negative electrode material contains a polymer compound having a repeating structure of oxy C$_{2-4}$ alkylene units, a content of the polymer compound in the negative electrode material is 600 ppm or less on a mass basis, and an arithmetic average roughness Ra of a surface of the positive electrode current collector is 2 $\mu$m or more.

(5) In any one of (1) to (4), a content of the polymer compound in the negative electrode material may be 30 ppm or more and 500 ppm or less on a mass basis.

(6) In any one of (1) to (5), an arithmetic average roughness Ra of a surface of the positive electrode current collector may be 50 $\mu$m or less or 10 $\mu$m or less.

(7) In any one of (1) to (6), the arithmetic average roughness Ra of the surface of the positive electrode current collector may be 4 $\mu$m or more.

(8) In any one of (1) to (7), the polymer compound may contain a compound having Mn of 5,000,000 or less, 3,000,000 or less, 2,000,000 or less, 500,000 or less, 100,000 or less, 50,000 or less, 20,000 or less, 10,000 or less, 5,000 or less, 4,000 or less, 3,000 or less, or 2,500 or less.

(9) In any one of (1) to (8), the polymer compound may contain a compound having Mn of 300 or more, 400 or more, 500 or more, 1,000 or more, 1,500 or more, or 1,800 or more.

(10) In any one of (1) to (9), the polymer compound may contain at least one selected from the group consisting of the hydroxy compound having a repeating structure of oxy C$_{2-4}$ alkylene units, an etherified product of the hydroxy compound and an esterified product of the hydroxy compound, and

the hydroxy compound may be at least one selected from the group consisting of a poly C$_{2-4}$ alkylene glycol, a copolymer having a repeating structure of oxy C$_{2-4}$ alkylene, and a poly C$_{2-4}$ alkylene oxide adduct of a polyol.

(11) In (10), the polymer compound may contain at least one selected from the group consisting of polyethylene glycol oleate, polyethylene glycol dilaurate, polyethylene glycol distearate and polyethylene glycol dioleate.

[Examples]

Hereinafter, the present invention will be specifically described based on examples and comparative examples, but the present invention is not limited to the following examples.

<<Lead-acid batteries A1 to A20>>

(1) Preparation of lead-acid battery

(a) Preparation of negative electrode plate

Lead powder as a raw material, barium sulfate, carbon black, polyethylene glycol oleate as a polymer compound (Mn 500), and sodium lignin sulfonate as an organic expander (sodium lignin sulfonate) are mixed with an appropriate amount of a sulfuric acid aqueous solution to obtain a negative electrode paste. At this time, the components are mixed so that the content of the polymer compound in the negative electrode material, is the value shown in Table 1, the content of the organic expander is 0.1 mass%, the content of barium sulfate barium is 0.4 mass%, and the content of carbon black is 0.2 mass%. A mesh portion of an expanded grid made of a Pb-Ca-Sn alloy is filled with the negative electrode paste, which is then cured and dried to obtain a non-formed negative electrode plate, each of which is determined by the procedure described above.

(b) Preparation of positive electrode plate

Lead powder as raw material is mixed with a sulfuric acid aqueous solution to obtain a positive electrode paste. A punched current collector made of a Pb-Ca-Sn alloy is provided, and the surfaces of the longitudinal rib and the lateral rib of the current collector are pressed against a predetermined mold to obtain a positive electrode current collector in which a surface of the positive electrode current collector has an arithmetic average surface roughness Ra shown in Table 1. A mesh portion of the positive electrode current collector is filled with a positive electrode paste, which is cured and dried to obtain a non-formed positive electrode plate.

(c) Preparation of test battery

A test battery has a rated voltage of 2 V/cell and a rated 20-hour rate capacity of 60 Ah. An element of the test battery includes seven positive electrode plates and seven negative electrode plates. The negative electrode plate is housed in a bag-shaped separator formed of a polyethylene microporous film, and alternately stacked with the positive electrode plate to form the element. The element is housed in a polypropylene container together with an electrolyte solution (sulfuric acid aqueous solution), and subjected to formation in the container to prepare a flooded-type lead-acid battery. The specific gravity of the electrolyte solution in the lead-acid battery in the fully charged state at 20°C is 1.28.

When the polymer compound has a repeating structure of oxyethylene units, a peak derived from $-CH_2-$ of the oxyethylene unit is observed in a chemical shift range of 3.2 ppm or more and 3.8 ppm or less in a $^1$H-NMR spectrum of the polymer compound which is measured by the foregoing procedure. When the polymer compound has a repeating structure of oxypropylene units, a peak derived from $-CH_2-$ of the oxypropylene unit is observed in a chemical shift range of 3.2 ppm or more and 3.42 ppm or less and a peak derived from $-CH<$ and $-CH_2-$ of the oxypropylene unit is observed in a chemical shift range of more than 3.42 ppm and 3.8 ppm or less in the $^1$H-NMR spectrum of the polymer compound which is measured by the foregoing procedure. In the $^1$H-NMR spectrum, a ratio of an integrated value of the peak of 3.2 ppm to 3.8 ppm to the sum of the integrated value of the peak of 3.2 ppm to 3.8 ppm, an integrated value of a peak of hydrogen atoms of the $-CH_2-$ group bonded to the oxygen atom, and an integrated value of a peak of a hydrogen atom of the $-CH<$ group bonded to the oxygen atom is 96 to 100%.

In this way, batteries A1 to A20 having different combinations of the content of the polymer compound in the negative electrode material and/or the arithmetic mean surface roughness Ra of a surface of the positive electrode current collector are prepared, and evaluation is performed as described later. Batteries A2 to A4, A6 to A8, A10 to A12 and A14 to A16 are examples, and batteries A1, A5, A9, A13, and A17 to A20 are comparative examples.

<<Lead-acid batteries B1 to B4>>

In preparation of the negative electrode plate, a negative electrode paste is obtained using any one of polyethylene glycol dilaurate (Mn 630), polyethylene glycol distearate (Mn 810), polyethylene glycol dioleate (Mn 880), and polypropylene glycol in place of polyethylene glycol oleate as the polymer compound. The polymer compound is mixed with the negative electrode paste so that the content of the polymer compound in the negative electrode material is 0.0265 mass% (265 ppm). Except for the above, the same procedure as in the case of batteries A1 to A20 is carried out to prepare a negative electrode plate, followed by preparation of a test battery. In this way, batteries B1 to B4 (examples) having different polymer compounds in the negative electrode material are prepared, and evaluation is performed as described later.

<<Lead-acid batteries C1 to C4>>

In preparation of the negative electrode plate, a negative electrode paste free of a polymer compound is obtained. Except for the above, the same procedure as in the case of batteries A1 to A20 is carried out to prepare a negative electrode plate, followed by preparation of a test battery. In this way, batteries C1 to C4 are prepared which have no polymer compound in the negative electrode material and are different in surface roughness Ra of the positive electrode current collector (comparative examples), and evaluation is performed as described later.

(2) Evaluation

(a) Deep discharge cycle life

The deep discharge cycle number is measured by the above-described procedure using the test battery. The deep discharge cycle number of each lead-acid battery is evaluated by a ratio to the deep discharge cycle number of the lead-acid battery C 1, which is defined as 100.

Table 1 shows the results. As shown in Table 1, batteries A2 to A4, A6 to A8, A10 to A12, A14 to A16 and B1 to B4 in which the polymer compound is added to the negative electrode material in an amount of 600 ppm (0.06 mass%) or less on a mass basis and the surface roughness Ra of the positive electrode current collector is 2 $\mu$m or more have a significantly improved deep discharge cycle number the number as compared to the battery C1 in which the polymer compound is not added and the surface roughness Ra of the positive electrode current collector is less than 2 $\mu$m.

From Table 1, the deep discharge cycle number tends to increase as the surface roughness Ra of the positive electrode current collector is increased. There is a tendency that the deep discharge cycle number sharply increases near a point where the surface roughness Ra of the positive electrode current collector is 2 $\mu$m, and the amount of increase drops asymptotically to a certain value when the surface roughness Ra of the positive electrode current collector is 2 $\mu$m to 4 $\mu$m. However, comparison of batteries A1 to A20 with batteries C1 to C4 which are free of a polymer compound shows that the deep discharge cycle number noticeably increases with an increase in Ra when the polymer compound is added in an amount of 600 ppm (0.06 mass%).

It is seen from Table 1 that when the polymer compound was not added, the deep discharge cycle number of each of batteries C2 to C4 in which the surface roughness Ra of the positive electrode current collector was 2 $\mu$m or more was improved by about 7% with respect to the battery C1 in which the surface roughness Ra was less than 2 $\mu$m. When the polymer compound was added in an amount of 600 ppm (0.06 mass%) or less and the surface roughness Ra of the positive electrode current collector was less than 2 $\mu$m, the amount of improvement of the deep discharge cycle number in, for example, batteries A5 and A9 was about 7% with respect to the battery C1.

On the other hand, when the polymer compound was added in an amount of 600 ppm (0.06 mass%) or less and the surface roughness Ra of the positive electrode current collector was 2 $\mu$m or more, the deep discharge cycle number in, for example, batteries A6 to A8 and A11 and 12 was improved by about 40% with respect to the battery C 1. This improvement of the deep discharge cycle number exceeded expectation.

[Table 1]

| Battery | Polymer compound | | Surface roughness Ra of positive electrode current collector Ra($\mu$m) | Deep discharge cycle number |
| --- | --- | --- | --- | --- |
| | Type | Content (mass%) | | |
| A1 | Polyethylene glycol oleate | 0.003 | 1.5 | 100 |
| A2 | Polyethylene glycol oleate | 0.003 | 2 | 129 |
| A3 | Polyethylene glycol oleate | 0.003 | 4 | 136 |
| A4 | Polyethylene glycol oleate | 0.003 | 10 | 136 |
| A5 | Polyethylene glycol oleate | 0.0265 | 1.5 | 107 |
| A6 | Polyethylene glycol oleate | 0.0265 | 2 | 143 |
| A7 | Polyethylene glycol oleate | 0.0265 | 4 | 143 |
| A8 | Polyethylene glycol oleate | 0.0265 | 10 | 143 |
| A9 | Polyethylene glycol oleate | 0.05 | 1.5 | 107 |
| A10 | Polyethylene glycol oleate | 0.05 | 2 | 129 |
| A11 | Polyethylene glycol oleate | 0.05 | 4 | 136 |
| A12 | Polyethylene glycol oleate | 0.05 | 10 | 136 |

(continued)

| Battery | Polymer compound | | Surface roughness Ra of positive electrode current collector Ra($\mu$m) | Deep discharge cycle number |
|---|---|---|---|---|
| | Type | Content (mass%) | | |
| A13 | Polyethylene glycol oleate | 0.06 | 1.5 | 100 |
| A14 | Polyethylene glycol oleate | 0.06 | 2 | 114 |
| A15 | Polyethylene glycol oleate | 0.06 | 4 | 114 |
| A16 | Polyethylene glycol oleate | 0.06 | 10 | 114 |
| A17 | Polyethylene glycol oleate | 0.075 | 1.5 | 57 |
| A18 | Polyethylene glycol oleate | 0.075 | 2 | 57 |
| A19 | Polyethylene glycol oleate | 0.075 | 4 | 57 |
| A20 | Polyethylene glycol oleate | 0.075 | 10 | 57 |
| B1 | Polyethylene glycol dilaurate | 0.0265 | 4 | 136 |
| B2 | Polyethylene glycol distearate | 0.0265 | 4 | 143 |
| B3 | Polyethylene glycol dioleate | 0.0265 | 4 | 143 |
| B4 | Polypropylene glycol | 0.0265 | 4 | 129 |
| C1 | - | - | 1.5 | 100 |
| C2 | - | - | 2 | 107 |
| C3 | - | - | 4 | 107 |
| C4 | - | - | 10 | 107 |

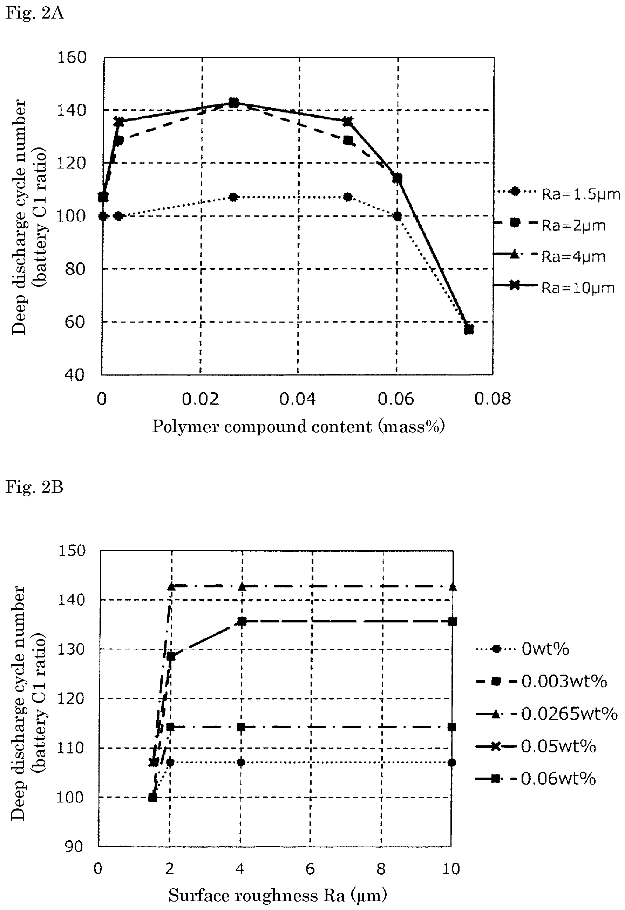

Fig. 2A is a graph obtained by plotting a change in deep discharge cycle number when the content of a polymer compound is changed for batteries A1 to A20 and batteries C 1 to C4. Fig. 2B is a graph obtained by plotting a change in deep discharge cycle number when the surface roughness Ra of the positive electrode current collector is changed for batteries A1 to A16 and batteries C 1 to C4. As shown in Fig. 2A, the deep discharge cycle number sharply increases near a point where the content of the polymer compound is 30 ppm on a mass basis when the surface roughness Ra of the positive electrode current collector is 2 $\mu$m or more. In particular, when the content of the polymer compound is in the range of 30 ppm to 500 ppm on a mass basis, the increase in deep discharge cycle number is noticeable. As shown in Fig. 2B, the deep discharge cycle number sharply increases at a point where the surface roughness Ra of the positive electrode current collector is 2 $\mu$m or more when the content of the polymer compound is 600 ppm on a mass basis.

INDUSTRIAL APPLICABILITY

The lead-acid batteries according to one aspect and another aspect of the present invention are suitable for use in an idling stop vehicle as, for example, a lead-acid battery for IS that is subjected to charge-discharge under PSOC conditions. The lead-acid battery can be suitably used as, for example, a power source for starting a vehicle (automobiles, motorcycles, etc.), and an industrial energy storage apparatus (for example, a power source of an electric vehicle (such as forklift) or the like). These are merely illustrative, and the application of the lead-acid battery is not limited thereto.

DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

**Claims**

1.  A lead-acid battery comprising a negative electrode plate, a positive electrode plate and an electrolyte solution,

    wherein the negative electrode plate includes a negative electrode material,
    the positive electrode plate includes a positive electrode current collector and a positive electrode material,
    the negative electrode material contains a polymer compound having a peak in a range of 3.2 ppm or more and 3.8 ppm or less in a chemical shift of a $^1$H-NMR spectrum measured using deuterated chloroform as a solvent, a content of the polymer compound in the negative electrode material is 600 ppm or less on a mass basis, and an arithmetic average roughness Ra of a surface of the positive electrode current collector is 2 $\mu$m or more.

2.  The lead-acid battery according to claim 1, wherein the polymer compound contains an oxygen atom bonded to a terminal group and a -CH$_2$-group and/or a -CH< group bonded to the oxygen atom, and
    in the $^1$H-NMR spectrum, a ratio of an integrated value of the peak to a sum of the integrated value of the peak, an integrated value of a peak of a hydrogen atom of the -CH$_2$- group, and an integrated value of a peak of a hydrogen atom of the -CH< group is 85% or more.

3.  The lead-acid battery according to claim 1 or 2, wherein the polymer compound has a repeating structure of oxy C$_{2-4}$ alkylene units.

4.  A lead-acid battery comprising a negative electrode plate, a positive electrode plate and an electrolyte solution,

    wherein the negative electrode plate includes a negative electrode material,
    the positive electrode plate includes a positive electrode current collector and a positive electrode material,
    the negative electrode material contains a polymer compound having a repeating structure of oxy C$_{2-4}$ alkylene units,
    a content of the polymer compound in the negative electrode material is 600 ppm or less on a mass basis, and an arithmetic average roughness Ra of a surface of the positive electrode current collector is 2 $\mu$m or more.

5.  The lead-acid battery according to any one of claims 1 to 4,
    wherein a content of the polymer compound in the negative electrode material is 30 ppm or more and 500 ppm or less on a mass basis.

6.  The lead-acid battery according to any one of claims 1 to 5,
    wherein an arithmetic average roughness Ra of a surface of the positive electrode current collector is 50 $\mu$m or less.

7. The lead-acid battery according to any one of claims 1 to 6, wherein the polymer compound contains at least one selected from the group consisting of a hydroxy compound having a repeating structure of oxy $C_{2-4}$ alkylene units, an etherified product of the hydroxy compound and an esterified product of the hydroxy compound, and the hydroxy compound is at least one selected from the group consisting of a poly $C_{2-4}$ alkylene glycol, a copolymer having a repeating structure of oxy $C_{2-4}$ alkylene, and a poly $C_{2-4}$ alkylene oxide adduct of a polyol.

8. The lead-acid battery according to claim 7, wherein the polymer compound contains at least one selected from the group consisting of polyethylene glycol oleate, polyethylene glycol dilaurate, polyethylene glycol distearate and polyethylene glycol dioleate.

9. The lead-acid battery according to any one of claims 1 to 8, wherein the arithmetic average roughness Ra of the surface of the positive electrode current collector is 10 $\mu$m or less.

Fig. 1

Fig. 2A

Fig. 2B

## INTERNATIONAL SEARCH REPORT

| International application No. |
| --- |
| **PCT/JP2021/039745** |

**A. CLASSIFICATION OF SUBJECT MATTER**

*H01M 4/14*(2006.01)i; *H01M 4/62*(2006.01)i; *H01M 4/73*(2006.01)i; *H01M 10/06*(2006.01)i
FI: H01M10/06 Z; H01M4/62 B; H01M4/14 Q; H01M4/73 A

According to International Patent Classification (IPC) or to both national classification and IPC

**B. FIELDS SEARCHED**

Minimum documentation searched (classification system followed by classification symbols)

H01M4/14; H01M4/62; H01M4/73; H01M10/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 60-182662 A (JAPAN STORAGE BATTERY CO LTD) 18 September 1985 (1985-09-18) entire text, all drawings | 1-9 |
| A | JP 9-147869 A (SHIN KOBE ELECTRIC MACH CO LTD) 06 June 1997 (1997-06-06) entire text, all drawings | 1-9 |
| A | JP 2017-162754 A (TORAY INDUSTRIES) 14 September 2017 (2017-09-14) paragraph [0036] | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 December 2021** | **28 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/039745**

| Patent document cited in search report | | | Publication date (day/month/year) | Patent family member(s) | Publication date (day/month/year) |
|---|---|---|---|---|---|
| JP | 60-182662 | A | 18 September 1985 | (Family: none) | |
| JP | 9-147869 | A | 06 June 1997 | (Family: none) | |
| JP | 2017-162754 | A | 14 September 2017 | (Family: none) | |

Form PCT/ISA/210 (patent family annex) (January 2015)

**EP 4 239 718 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003242983 A
- JP 2017525092 A